# EUROPEAN PATENT APPLICATION

(11) **EP 2 369 710 A1**
(43) Date of publication of application: **28.09.2011**
(21) Application number: 10305310.4
(22) Date of filing: 26.03.2010
(51) Int. Cl.: H02J 3/00

(54) **A method of estimating an energy demand to be covered by a supplier, corresponding computer program product, and data storage device therefor**

(71) Applicant: Alcatel Lucent, 75008 Paris (FR)
(72) Inventor: Kopp, Dieter, 75428, Illingen (DE); Stocker, Klaus, 70567, Stuttgart (DE)
(74) Representative: Kleinbub, Oliver

(57) **Abstract**

The invention concerns a method of estimating an energy demand to be covered by a supplier, the method comprising the steps of , for each of a plurality of customers of the supplier, taking (101) a continuous measurement of current energy consumption; based on the continuous measurement, recording (102) consumption data over a predetermined time interval; based on the consumption data, calculating (103) a load profile; converting (104) the consumption data into an estimate of future energy consumption by means of the load profile; and determining (105) the energy demand by aggregating the estimates for all customers. In a preferred embodiment, this demand is used as a basis for controlling the generation of electric power by the supplier. The invention further concerns a computer program product and a device therefor.

## Description

### Field of the Invention

The invention relates to a method of estimating an energy demand to be covered by a supplier according to claim 1, a computer program product according to claim 9, and a data storage device according to claim 10.

### Background

In the context of electricity distribution, energy demand management, also known as demand-side management (DSM), entails actions that influence the quantity or patterns of use of energy consumed by end users, such as actions targeting reduction of peak demand during periods when energy supply systems are constrained. Peak demand management does not necessarily decrease total energy consumption but can be expected to reduce the need for investments in networks and power plants.

For electricity use in particular, the price paid on the market is often regulated or fixed, and in many cases does not reflect the full cost of production. Electricity use can vary dramatically on short and medium time frames, and the pricing system may not reflect the instantaneous cost as additional higher-cost ("peaking") sources are brought on-line. In addition, the capacity or willingness of electricity consumers to adjust to prices by altering demand, sometimes called elasticity of demand, may be low, particularly over short time frames. In many markets, consumers, particularly retail customers, do not face real-time pricing at all, but pay rates based on average annual costs or other constructed prices.

To meet this challenge, United States Patent Application Publication No. US 2010/0070099 A1, published on March 18, 2010, discloses a household appliance system and method including an appliance control system having a common appliance interface provided on an appliance and a DSM module connected to the common appliance interface. The DSM module according to US 2010/0070099 corresponds to one select utility of a plurality of utilities and is adapted to communicate with the one select utility, allowing the resulting appliance control system to operate the appliance based on communications with that select utility.

A major downside of this conventional DSM approach lies in its inability to forecast the future energy demand to be covered by the utility.

### Summary

It is an object of the invention to present an improved approach that not only allows reducing an individual customer's energy consumption, but also serves to predict the expected overall demand imposed on the associated energy supplier as well as the cost related to the predicted consumption.

This object is achieved by a method according to claim 1, a computer program product according to claim 9, or a data storage device according to claim 10.

A main idea of the invention is to calculate a customer's individual load profile based on his or her current energy consumption, allowing converting the accumulated consumption data into an estimate of future consumption that can be aggregated across a supplier's entire customer base.

Further developments of the invention can be gathered from the dependent claims and the following description.

In the following the invention will be explained further making reference to the attached drawing.

To estimate, according to an embodiment of the invention, an energy demand to be covered by a supplier, a continuous measurement of current energy consumption is taken for each of a plurality of its customers. Based on this measurement, associated consumption data is recorded over a predetermined time interval, which data in turn forms the basis for calculating a load profile that allows converting the consumption data into an estimate of future energy consumption. Ultimately, the aforementioned energy demand is determined by aggregating the estimates for all customers.

### Brief Description of the Figures

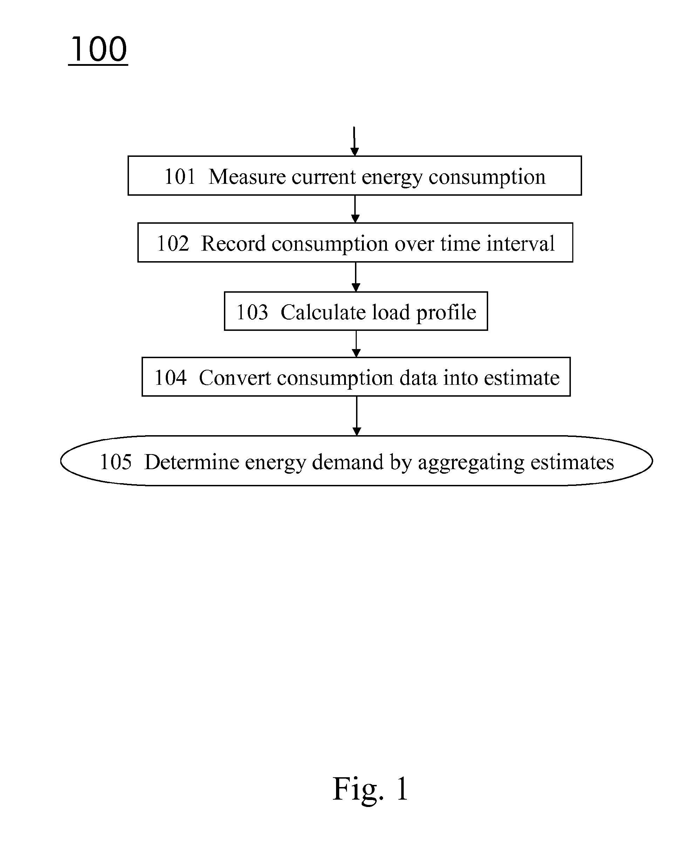

Fig. 1 shows a flowchart depicting a method according to an embodiment of the invention.

### Description of the Embodiments

In the following, a method according to the invention is elucidated by way of example, referencing Fig. 1.

The flowchart 100 of Fig. 1 comprises a first processing step 101, a second processing step 102, a third processing step 103, a fourth processing step 104, each represented by a rectangle. The flowchart 100 further comprises a terminator 105, represented by a rounded rectangle. A flow of control passing through the processing steps 101 to 104 and the terminal 105 is represented by a set of arrows. An arrow starting at a first symbol and ending at a second symbol indicates that control passes from the first symbol to the second symbol.

In the embodiment at hand, the method is applied within a smart grid infrastructure. A smart grid delivers electricity from a supplier to consumers using two-way digital technology to control appliances at the consumers' homes to save energy, reduce cost and increase reliability as well as transparency. Such a modernized electricity network is being promoted by many governments as a way of addressing energy independence, global warming, and emergency resiliency issues. The smart grid includes an intelligent monitoring system that keeps track of all electricity flowing in the system. It also incorporates the use of superconductive transmission lines for less power loss, as well as the capability of integrating alternative sources of electricity such as sun and wind. When power is least expensive, the smart grid can turn on selected home appliances such as washing machines or factory processes that can run at arbitrary hours. At peak times it can turn off selected appliances to reduce demand.

To enable real-time monitoring, the smart grid comprises a plurality of smart meters. In electricity distribution, by smart meter is meant a type of advanced meter that identifies consumption in more detail than a conventional meter and optionally, but generally, communicates that information via some network back to the local utility for monitoring and billing purposes. This capability is known in the art as telemetering. The term "smart meter" typically refers to an electric meter, but hereinafter will likewise be applied to the measurement of natural gas, water, and other resource consumption.

To perform long-time data storage and management for the vast quantities of data delivered by the smart meters, the smart grid infrastructure comprises meter data management (MDM) as a further component. An MDM system will typically import the data, then validate, cleanse, and process it before making it available for billing and analysis. Due to the flexibility of the MDM application, it is able to integrate into existing enterprise applications and help to streamline utility business processes. Further benefits of this embodiment can be seen in improved billing, customer service, outage management, and analysis of utility operations.

In the first processing step 101, for each of a plurality of customers of the supplier, the respective customer's smart meter takes a continuous measurement of current energy consumption. In the embodiment at hand, to enable its use for a wide variety of purposes, the energy is formed by electric power. In alternative embodiments, the energy may take the form of, inter alia, chemical or heat energy.

In the second processing step 102, based on the continuous measurement taken in the first processing step 101, the smart meter records consumption data over a predetermined time interval. In alternative embodiments, a strategically located utility meter load profiler, data logging sub-meter, portable data logger, or similar device may be used in place of the smart meter to record these readings at a set interval such as once every 15 minutes.

In the third processing step 103, the smart meter calculates a load profile based on the consumption data recorded in the second processing step 102. In electrical engineering, by load profile is meant a graph of the variation in the electrical load versus time. The load profile will typically vary according to customer type (typical examples include residential, commercial, and industrial), temperature, and holiday seasons. For visualization purposes, the smart meter makes the load profile available to the customer in the form of a load curve, that is, a chart showing the amount of electrical energy the respective customer uses over the course of time. To illustrate the relationship between generating capacity requirements and capacity utilization, an alternative embodiment may make use of a load duration curve (LDC). By LDC is meant a chart similar to a load curve but in which the consumption data is presented in descending order of magnitude, rather than chronologically. The LDC shows the capacity utilization requirements for each increment of load, wherein the height of each slice is a measure of capacity, and the width of each slice is a measure of the utilization rate or capacity factor. The product of the two is a measure of electrical energy, such as kilowatt-hours.

In the fourth processing step 104, the smart meter converts the consumption data into an estimate of future energy consumption by means of the load profile calculated in the third processing step 103. In supply chain management (SCM), such technique is commonly called customer-level forecasting. To meet requirements of data security and privacy on the customer's part, the consumption data per se is not transmitted to the supplier or MDM system.

In an intermediate processing step (not depicted), instead of making available the consumption data per se, the smart meter communicates only the estimate derived in the fourth processing step 104 to the MDM system by communication means of the smart grid infrastructure. Such means may include, but are not limited to, a cellular network, licensed radio, a combination of licensed and unlicensed radio, or power line communication (PLC). In accordance with its definition in computer networking, by PLC, also known as power line carrier, power line digital subscriber line (PDSL), mains communication, power line telecom (PLT), or power line networking (PLN), is meant a system for carrying data on a conductor of the smart grid also used for electric power transmission. Independently of the communication medium employed, the smart grid may make use of a fixed wireless network, mesh network, or any combination of the two. To allow the supplier to deploy multiple communication systems while using Internet Protocol (IP) technology as a common management platform, the smart grid of the embodiment at hand mandates the use of the Internet protocol suite (TCP/IP).

Finally, upon reaching the terminal 105, the MDM system determines the energy demand to be covered by the supplier by aggregating the estimates formed in the fourth processing step 104 for all customers. In an effort to meet the demand of its customers, the supplier makes use of this information to control its ongoing generation of electric power, striving to balance energy production and consumption.

To facilitate production on an industrial scale, the supplier makes use of a power station, also referred to as a generating station, power plant, or powerhouse. Within this power station, thermal energy or, in a preferred embodiment, a natural resource such as wave or tidal motion, wind, sunlight, or hydroelectricity is transformed into electric power, typically by means of a generator. As they can be naturally replenished, the latter types of energy sources are known in the art as renewable energy. Further improving the aforementioned balance, the supplier, to accurately predict its anticipated energy production, takes into account a weather forecast and determines the envisaged impact on the renewable energy that can be generated within a predetermined timeframe.

To shorten the transmission route of the electric power from the supplier to the customer, thus minimizing transmission loss and reducing the number of power lines required, the smart grid makes use of distributed power generation. In the field of power station technology, by distributed generation, also called on-site generation, dispersed generation, embedded generation, decentralized generation, decentralized energy, or distributed energy, is meant the generation of electricity from a plurality of small energy sources in physical proximity to the customer. Inherently, the distributed power generation is based on a distributed energy resource (DER) such as sun or wind. To further improve the reliability of the smart grid, it takes the form of a micro grid.

Upon generation, the supplier delivers the electric power to its customers by means of the smart grid. This sub-process is known in the art as electricity delivery or power delivery. To minimize transmission loss, the supplier increases voltage at what is known in the art as a step-up substation. After the energy has traveled along a transmission line to the vicinity of the customer, the voltage is decreased, or stepped down, at another substation. Each of the step-up or step-down current transformers may include an additional metering appliance configured to transmit their measurements to the supplier by communication means of the smart grid. Ultimately, a distribution power line carries the electricity until it reaches the customer site.

To compensate for an imbalance between current generation capacity and expected demand, the smart grid comprises battery buffers at various levels to store part of the electric power for later delivery. An additional such battery buffer system may be installed at or near the customer site to allow the customer to compensate for supply bottlenecks or optimize his or her consumption according to the tariff structure of the supplier.

In order to use the delivered electricity for propulsion of an electric car, the customer may plug the car into the smart grid. For storing the energy thus obtained in rechargeable battery packs, the car takes the form of a battery electric vehicle (BEV). To this end, the BEV transforms the electric power received through the smart grid into chemical energy. Such BEV is called off-vehicle charge capable (OVCC) or pluginable in the context of automotive technologies, which means its batteries can be charged from an off-vehicle electric energy source that cannot be connected or coupled to the vehicle while the vehicle is being driven.

For enhanced power and energy density, the battery packs are based on lithium-ion (Li-ion) batteries in which lithium ions move from the negative electrode to the positive electrode during discharge, and reversely when plugged into the smart grid. During such discharge, the BEV employs the electric energy thus freed to power an electric motor. To improve performance and fuel economy of the BEV, it takes the form of a plug-in hybrid electric vehicle (PHEV), comprising a conventional internal combustion engine (ICE) propulsion system in addition to the electric propulsion system described above.

To improve the estimate derived in the fourth processing step 104, the BEV transmits its current state of charge, along with a prediction of the electric power required for fully recharging its battery packs, to the smart meter or directly to the MDM. To this end, the BEV is equipped with an air interface for a cellular mobile communication system such as Long Term Evolution (LTE).

In order to reflect the customers' varying consumption levels and patterns as well as the associated impact on the supplier's costs of providing the electric power, the latter employs alternative tariffs based on the energy demand determined upon reaching the terminal 105. To this end, the smart meter takes the form of a multiple-tariff meter, also known as a variable-rate meter, permitting switching between a plurality of tariffs defined by the supplier, such as "peak", "off-peak", and "shoulder". Legal requirements may require the supplier to define and announce such tariffs well in advance of their application, such as 24 hours before the tariff is activated. The predicted energy demand is used by the supplier to dynamically control the tariffs that can be made available to its customers.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawing merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of estimating an energy demand to be covered by a supplier, the method comprising the steps of,
for each of a plurality of customers of the supplier, taking (101) a continuous measurement of current energy consumption,
based on the continuous measurement, recording (102) consumption data over a predetermined time interval,
based on the consumption data, calculating (103) a load profile,
converting (104) the consumption data into an estimate of future energy consumption by means of the load profile, and
determining (105) the energy demand by aggregating the estimates for all customers.

2. A method according to claim 1, **characterized in that** the method comprises the further step of,
based on the energy demand, controlling a production of energy by the supplier.

3. A method according to claim 2, **characterized in that** the energy comprises electric power and its production comprises the step of
generating the electric power by means of a power station.

4. A method according to claim 3, **characterized in that** the method comprises the further step of
delivering the electric power from the power station to the customers by means of an electrical grid.

5. A method according to any of the claims 2 to 4, **characterized in that** the energy is renewable and produced by means of a natural resource.

6. A method according to claim 4 or 5, **characterized in that** the method comprises the further steps of
plugging a battery electric vehicle into the electrical grid and
charging the battery electric vehicle by means of the electric power.

7. A method according to claim 6, wherein the estimate of future energy consumption is further based on a state of charge of the battery electric vehicle and the method comprises the further step of
transmitting the state of charge by means of a mobile communication system.

8. A method according to any of the preceding claims, **characterized in that** the method comprises the further step of,
based on the energy demand, switching between a plurality of tariffs for a supply of energy by the supplier.

9. A computer program product comprising computer-executable instructions for performing a method when the program is run on a computer, the method comprising the steps of,
for each of a plurality of customers of an energy supplier, taking (101) a continuous measurement of current energy consumption,
based on the continuous measurement, recording (102) consumption data over a predetermined time interval,
based on the consumption data, calculating (103) a load profile,
converting (104) the consumption data into an estimate of future energy consumption by means of the load profile, and
determining (105) an energy demand by aggregating the estimates for all customers.

10. A device programmed or configured to perform a method comprising the steps of,
for each of a plurality of customers of an energy supplier, taking (101) a continuous measurement of current energy consumption,
based on the continuous measurement, recording (102) consumption data over a predetermined time interval,
based on the consumption data, calculating (103) a load profile,
converting (104) the consumption data into an estimate of future energy consumption by means of the load profile, and
determining (105) an energy demand by aggregating the estimates for all customers.
